# EUROPÄISCHE PATENTSCHRIFT

(11) **EP 0 426 975 B1**
(45) Veröffentlichungstag und Bekanntmachung des Hinweises auf die Patenterteilung: **11.05.1994**
(21) Anmeldenummer: 90117596.8
(22) Anmeldetag: 12.09.1990
(51) Int. Cl.: B29C 47/34, B29C 47/00, B29C 53/10

(54) **Flachlege- und Abzugsvorrichtung für eine im Blasverfahren hergestellte Kunststoffschlauchfolienbahn**
Flattening and haul-off apparatus for the blow moulding of a plastic tubular film
Dispositif de mise à plat et de tirage pour une bande tubulaire en matière plastique fabriquée par un procédé de soufflage

(30) Priorität: 06.11.1989 DE 3936923
(43) Veröffentlichungstag der Anmeldung: 15.05.1991
(73) Patentinhaber: Windmöller & Hölscher, D-49525 Lengerich (DE)
(72) Erfinder: Achelpohl, Fritz, Ing. grad., D-4540 Lengerich (DE)
(74) Vertreter: Gossel, Hans K., Dipl.-Ing.

(56) Entgegenhaltungen:
- EP-A- 0 195 215
- DE-A- 2 156 079
- US-A- 3 716 322

## Beschreibung

Die Erfindung betrifft eine Flachlege- und Abzugsvorrichtung für eine im Blasverfahren von einem ortsfest angeordneten Folienblaskopf hergestellte Kunststoffschlauchfolienbahn, deren Flachlegeplatten und Abquetschwalzen reversierend um die Achse des zugeführten Folienschlauches schwenkbar sind, mit einer nachgeschalteten ortsfesten Wickel- oder Weiterverarbeitungsvorrichtung und mit einer radial äußeren, zu den Abquetschwalzen parallelen und mit diesen reversierenden Umlenkwalze und einer radial inneren Wendestange, über die die Schlauchfolienbahn zwischen den Abquetschwalzen und der Wickel- oder Weiterverarbeitungsvorrichtung bzw. einer die Schlauchfolienbahn dieser zuführenden ortsfesten Umlenkwalze geführt ist und die in zu der Schwenkebene der Abquetschwalzen parallelen Ebenen liegen, wobei der Abstand der Umlenkwalze von der Drehachse in jeder möglichen Schwenkstellung größer ist als der Abstand des von der Bahn umschlungenen Teils der nahe der Schwenkachse schwenkbar gelagerten Wendestange von dieser und wobei die Schwenkbewegung der Wendestange nur halb so groß ist wie die der Umlenkwalze.

Bei einer aus der DE-PS 21 56 079 bekannten Vorrichtung dieser Art ist die Wendestange in Halterungen auf einer vertikalen, reversierend drehbaren Welle gelagert, die an ihrem unteren Ende ein Gestell trägt, in dem die Abquetschwalzen und die Umlenkwalze gelagert und die Flachlegeplatten befestigt sind. Da die Wendestange nahe der vertikalen Welle angeordnet sein muß und der Abstand der Wendestange zu der Welle nur in engen Grenzen geändert werden kann, läßt sich der Durchmesser der Wendestange ebenfalls nur in engen Grenzen variieren, so daß sich der Durchmesser der Wendestange nicht beliebig vergrößern läßt, was jedoch wünschenswert sein kann. Bei der bekannten Vorrichtung ist somit nicht nur der Durchmesser der Wendestange begrenzt, sondern die Wendestange ist zusätzlich auch dicht neben der diese tragenden vertikalen Welle angeordnet, so daß es schwierig ist, bei der Einrichtung der Vorrichtung die Folienbahn um diese Wendestange herumzuführen.

Aufgabe der Erfindung ist es daher, eine Vorrichtung der eingangs angegebenen Art zu schaffen, bei der sich der Durchmesser der Wendestange beliebig vergrößern läßt, ohne daß dadurch das Einziehen des flachgelegten Folienschlauches beim Einrichten der Vorrichtung behindert und erschwert wird.

Erfindungsgemäß wird diese Aufgabe bei einer Vorrichtung der gattungsgemäßen Art dadurch gelöst, daß die Abquetschwalzen mit der Umlenkwalze einerseits und die Wendestange andererseits auf Wellen oder Achsen mit miteinander fluchtenden Mittellinien in einem Tragrahmen o.dgl. gelagert sind und daß der Tragrahmen zwischen den Lagerungen eine Aussparung im Bereich der Wendestangenschwenkebene aufweist, die die Mittellinie durchsetzt. Bei der erfindungsgemäßen Vorrichtung ist auf eine durchgehende, das Gestell mit den Abquetschwalzen und der Umlenkwalze tragende Welle verzichtet worden. Stattdessen ist ein Tragrahmen vorgesehen, der beidseits einer Aussparung mit Lagerungen einerseits für das die Abquetschwalzen und die Umlenkwalze aufnehmende Gestell und andererseits für einen Träger versehen ist, in dem die Wendestange gehaltert ist. Da die Aussparung die miteinander fluchtenden Schwenkachsen der Abquetschwalzen und der Wendestange durchsetzt, ist in dem Tragrahmen ein Freiraum geschaffen worden, in dem die Wendestange ungehindert durch eine zentrale Schwenkwelle ihre reversierende Bewegung ausführen kann. Die erfindungsgemäße Vorrichtung erlaubt es daher, die Wendestange mit dem gewünschten Durchmesser auszuführen, ohne daß dadurch Nachteile beim Einziehen des flachgelegten Folienschlauches beim Einrichten der Vorrichtung nach dem Anfahren des Folienblaskopfes in Kauf genommen werden müßten.

Zweckmäßigerweise ist der Tragrahmen U-förmig ausgebildet, wobei in dessen horizontal übereinanderliegenden Schenkeln einerseits die Wendestange und andererseits die aus den Abquetschwalzen und der Umlenkwalze bestehende Einheit gelagert sind. Der Tragrahmen kann dabei unmittelbar an einer Hallendecke oder aber auch in einer entsprechenden turmartigen Tragkonstruktion befestigt sein.

In weiterer Ausgestaltung der Erfindung ist vorgesehen, daß die Wendestange zwischen gabelförmigen Tragschenkeln undrehbar gehaltert ist, die an einem in der Aussparung liegenden vertikalen Schenkel eines drehbar gelagerten Winkelstücks befestigt sind. Der horizontale Schenkel des aus dem Winkelstück bestehenden Trägers kann durch einen vertikalen Wellenzapfen in dem oberen Teil oder oberen Schenkel des Tragrahmens gelagert sein.

In weiterer Ausgestaltung der Erfindungs ist vorgesehen, daß in dem Tragrahmen eine zu den Mittellinien bzw. Schwenkachsen der Wellenzapfen parallele Antriebswelle gelagert ist, die Zahnräder trägt, die mit den Zahnrädern der Träger der Wendestange und der Abquetschwalzen kämmen, wobei das Zahnrad der Abquetschwalze mit einer Drehzahl angetrieben ist, die doppelt so groß ist wie die der Wendestange. Auf diese Weise läßt sich einfach ein aufeinander abgestimmter Zwangsantrieb für die Abquetschwalzen und die Wendestange schaffen.

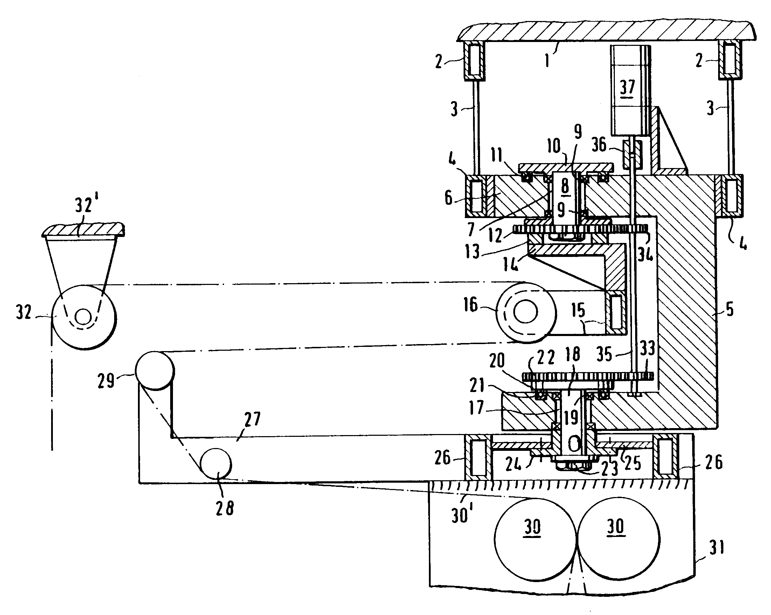

Ein Ausführungsbeispiel der Erfindung wird nachstehend anhand der Zeichnung, in deren einziger Figur eine Seitenansicht der Reversiervorrichtung, teilweise im Schnitt, in ihrer Grundstellung dargestellt ist, näher erläutert.

An der Hallendecke 1 sind Quertraversen 2 fest verschraubt.

An diesen Quertraversen 2 sind über Stangen 3 Träger 4 befestigt, mit denen ein U-Rahmen 5 verschweißt ist. In dem oberen freien Schenkel 6 dieses U-Rahmens 5 ist in einer Bohrung 7 ein Bolzen 8 über Lager 9 drehbar gelagert. Dieser Bolzen 8 weist einen Kragen 10 auf, der sich auf einem Drucklager 11 abstützt. Mit dem dem Kragen 10 gegenüberliegenden Ende des Bolzens 8 ist ein Zahnrad 12 fest verschraubt, mit dem über einen Ring 13 ein Halter 14 verbunden ist. Über diesen Halter 14 wird ein U-Rahmen 15 gehalten, zwischen dessen frei auslaufenden Schenkeln eine feststehende Wendestange 16 gelagert ist.

Der untere Schenkel des U-Rahmens 5 weist ebenfalls eine Bohrung 17 auf, in der ein Bolzen 18 über Ladger 19 drehbar gelagert ist. Dieser Bolzen 18 hat einen kragenförmigen Ansatz 20, der sich auf dem Drucklager 21 abstützt. Mit dem kragenförmigen Ansatz 20 ist ein Zahnrad 22 verschraubt. An der dem kragen 20 entgegengesetzten Seite des Bolzens 18 ist an diesem über eine Schraube 23 eine mit einem Kragen versehene Nabe 24 gehalten, mit der eine Platte 25 fest verschraubt ist. Diese Platte 25 trägt einen Rahmen, der aus zwei Vierkantprofilen 26 und aus zwei Profilarmen 27 besteht, wobei letztere wesentlich länger sind als die Hohlprofile 25 und an ihren frei auslaufenden Enden zwischen sich eine Führungsrolle 28 und eine Leitwalze 29 aufnehmen. Die Abquetschwalzen 30 sind in zwei parallel zueinander angeordneten Platten 31 gelagert, die mit den Armen 27 verschweißt sind. Der durch die Abquetschwalzen 30 abgequetschte Folienschlauch 30′ wir über die Führungsrolle 28 die Leitwalze 29 und die Wendestange 16 sowie einer ortsfesten Umlenkrolle 32 einem nicht dargestellten Wickler zugeführt. Die Umlenkrolle 32 ist an einer Konsole 32′ befestigt. Zum Zwecke der Reversierung steht das Zahnrad 12 mit einem Ritzel 34 in Verbindung. Beide Ritzel 33 und 34 sind auf einer Welle 35 aufgekeilt, die in den frei auslaufenden Schenkeln des U-Rahmens 5 gelagert ist. Über eine Kupplung 36 steht die Welle mit einem Antriebsmotor 37 in Verbindung. Aufgrund der Tatsache, daß die Zahnräder 12 und 22 die gleiche Zähnezahl aufweisen und das Ritzel 33 doppelt soviel Zähne aufweist wie das Ritzel 34 wird die Leitwalze 29 bei einem Rversiervorgang um den doppelten Winkelbetrag verschwenkt wie die Wendestang 16. Der Motor 37 wird dabei derart gesteuert, daß die Leitwalze 29 um 180 Grad und die Wendestange 16 um 90 Grad reversiert.

Da die miteinander fluchtenden Wellenzapfen 8,18, die den Träger 14,15 für die undrehbare Wendestange 16 und das Gestell für die Abquetschwalzen 30, die Flachlegeplatten und die Umlenkrolle 29 tragen, zur Bildung einer Aussparung in dem U-förmigen Rahmen 5 einen axialen Abstand voneinander aufweisen, ist für die Wendestange 16 ein Freiraum geschaffen, der es ermöglicht, diese mit beliebig großem Durchmesser auszuführen.

## Patentansprüche

1. Flachlege- und Abzugsvorrichtung für eine im Blasverfahren von einem ortsfest angeordneten Folienblaskopf hergestellte Kunststoffschlauchfolienbahn, deren Flachlegeplatten und Abquetschwalzen (30) reversierend um die Achse des zugeführten Folienschlauches schwenkbar sind,
mit einer nachgeschalteten ortsfesten Wickel- oder Weiterverarbeitungsvorrichtung und
mit einer radial äußeren, zu den Abquetschwalzen (30) parallelen und mit diesen reversierenden Umlenkwalze (29) und einer radial inneren Wendestange (16), über die die Schlauchfolienbahn zwischen den Abquetschwalzen (30) und der Wickel- oder Weiterverarbeitungsvorrichtung bzw. einer die Schlauchfolienbahn dieser zuführenden ortsfesten Umlenkwalze (32) geführt ist und die in zu der Schwenkebene der Abquetschwalzen (30) parallelen Ebenen liegen,
wobei der Abstand der Umlenkwalze (29) von der Drehachse in jeder möglichen Schwenkstellung größer ist als der Abstand des von der Bahn umschlungenen Teils der nahe der Schwenkachse schwenkbar gelagerten Wendestange (16) von dieser und
wobei die Schwenkbewegung der Wendestange (16) nur halb so groß ist wie die der Umlenkwalze (29),
**dadurch gekennzeichnet**,
daß die Abquetschwalzen (30) mit der Umlenkwalze (29) einerseits und die Wendestange (16) andererseits auf Wellen (8, 18) oder Achsen mit miteinander fluchtenden Mittellinien in einem Tragrahmen (5) o. dgl. gelagert sind und daß der Tragrahmen (5) zwischen den Lagerungen eine Aussparung im Bereich der Wendestangenschwenkebene aufweist, die die Mittellinie durchsetzt.

2. Vorrichtung nach Anspruch 1, dadurch gekennzeichnet, daß der Tragrahmen (5) U-förmig ausgebildet ist und in dessen horizontal übereinander liegenden Schenkeln (6) einerseits die Wendestange (16) und andererseits die aus den Abquetschwalzen (30) und der Umlenkwalze (29) bestehende Einheit gelagert sind.

3. Vorrichtung nach Anspruch 1 oder 2, dadurch gekennzeichnet, daß die Wendestange (16) zwischen gabelförmigen Tragschenkeln (15) undrehbar gehaltert ist, die an einem in der Aussparung liegenden vertikalen Schenkel eines drehbar gelagerten Winkelstücks (14) befestigt sind.

4. Vorrichtung nach einem der Ansprüche 1 bis 3, dadurch gekennzeichnet, daß in dem Tragrahmen (5) eine zu den Mittellinien parallele Antriebswelle gelagert ist, die Zahnräder (33, 34) trägt, die mit Zahnrädern (12, 22) der Träger (14, 31) der Wendestange (16) und der Abquetschwalzen (30) kämmen, und daß das Zahnrad (22) der Abquetschwalze (30) mit einer Drehzahl angetrieben ist, die doppelt so groß ist wie die der Wendestange (16).

## Claims

1. A flattening and haul-off apparatus for a plastic tubular film web produced by a film blowing head that is fixed in position, whose flattening plates and squeezing rollers (30) can be pivoted in a reversing mode round the axis of the fed tubular film,
with, disposed down the line, a winding or further processing apparatus that is fixed in position and
with a radially outer deflecting roller (29) that is parallel to the squeezing rollers (30) and is reversing with them, and a radially inner turning bar (16), over which the tubular film web is carried between the squeezing rollers (30) and the winding or further processing apparatus, or a deflecting roller (32) which is fixed in position and feeds the tubular film web thereto and which lie in planes parallel to the pivoting plane of the squeezing rollers (30),
in which arrangement, the distance of the deflecting roller (29) from the axis of rotation is greater in every possible pivoting position than the distance of the part enveloped by the web of the turning bar (16) from the latter, which bar is pivotably mounted near the axis of pivoting and
in which arrangement, the pivoting movement of the turning bar (16) is only half as great as that of the deflecting roller (29),
**characterized in that**
the squeezing rollers (30) with the deflecting roller (29) on the one hand, and the turning bar (16) on the other hand, are mounted on shafts (8, 18) or pins with median lines that are aligned with each other in a supporting frame (5) or the like, and that the supporting frame (5) has, between the mounting means, a cutout in the zone of the plane of the turning bar, which passes through the median line.

2. An apparatus according to claim 1, characterized in that the supporting frame (5) has a U-shaped design and that in its arms (6) which are horizontally superposed on one another, there are mounted on the one hand, the turning bar (16) and on the other hand, the unit consisting of the squeezing rollers (30) and the deflecting roller (29).

3. An apparatus according to claim 1, characterized in that the turning bar (16) is mounted, secured against rotation, between fork-shaped supporting arms (15) which are mounted on an arm disposed in the cutout of an angle element (14) which is mounted for rotation.

4. An apparatus according to one of claims 1 to 3, characterized in that in the supporting frame (5), there is mounted a drive shaft that is parallel to the median lines, which carries toothed wheels (33, 34) that mesh with toothed wheels (12, 22) of the supports (14, 31) of the turning bar (16) and of the squeezing rollers (30), and that the toothed wheel (22) of the squeezing rollers (30) is driven at a speed of rotation which is twice as great as that of the turning bar (16).

## Revendications

1. Dispositif de mise à plat et de tirage pour une bande tubulaire en matière plastique fabriquée par un procédé de soufflage par une tête de soufflage de feuilles montée fixe, dont les plaques de mise à plat et les rouleaux essoreurs (30) peuvent pivoter de façon réversible autour de l'axe du film tubulaire amené,
avec un dispositif d'enroulement ou de traitement ultérieur fixe disposé à la suite et
avec un rouleau de renvoi (29) radial extérieur, parallèle aux rouleaux essoreurs (30) et effectuant un mouvement réversible avec ceux-ci, et une barre de retournement radial intérieur (16) sur laquelle la bande tubulaire est guidée entre les rouleaux essoreurs (30) et le dispositif d'enroulement ou de traitement ultérieur ou sur un rouleau de renvoi fixe (32) amenant la bande tubulaire à celui-ci, et qui se situent dans des plans parallèles au plan de pivotement des rouleaux essoreurs (30),
l'écart du rouleau de renvoi (29) relativement à l'axe de rotation est plus grand dans n'importe quelle position de pivotement possible que l'écart de la partie entourée par la bande de la barre de retournement (16) montée pivotante près de l'axe de pivotement relativement à celui-ci et,
le mouvement de pivotement de la barre de retournement (16) ne correspondant qu'à la moitié de celui du rouleau de renvoi (29),
caractérisé
en ce que les rouleaux essoreurs (30) avec le rouleau de renvoi (29), d'une part, et la barre de retournement (16), d'autre part, sont montés sur des arbres (8, 18) ou des axes avec des lignes médianes en alignement, dans un châssis de support (5) ou analogue, et en ce que le châssis de support (5) présente entre les supports un évidement au voisinage du plan de pivotement de la barre de retournement qui traverse la ligne médiane.

2. Dispositif selon la revendication 1, caractérisé en ce que le châssis de support (5) est réalisé en forme de U, et que dans les branches superposées horizontalement (6) de celui-ci, est logée, d'une part, la barre de retournement (16) et, d'autre part, l'unité constituée des rouleaux essoreurs (30) et du rouleau de renvoi (29).

3. Dispositif selon la revendication 1 ou 2, caractérisé en ce que la barre de retournement (16) est retenue immobile en rotation entre les branches de support (15) en forme de fourche qui sont fixées à une branche verticale se situant dans l'évidement d'une pièce coudée (14) montée à rotation.

4. Dispositif selon l'une des revendications 1 à 3, caractérisé en ce qu'un arbre menant parallèle aux lignes médianes est logé dans le châssis de support (5) et qui supporte des roues dentées (33,34) qui engrènent avec les roues dentées (12,22) des supports (14,31) de la barre de retournement (16) et des rouleaux essoreurs (30), et en ce que la roue dentée (22) du rouleau essoreur (30) est entraînée suivant un nombre de tours qui correspond au double de celui de la barre de retournement (16).
